# NEW EUROPEAN PATENT SPECIFICATION

(11) **EP 2 740 776 B2**
(45) Date of publication and mention of the opposition decision: **19.12.2018**
(45) Mention of the grant of the patent: 08.07.2015
(21) Application number: 13195612.0
(22) Date of filing: 04.12.2013
(51) Int. Cl.: C09D 183/06, C09D 183/08

(54) **Coating composition for resins**
Beschichtungszusammensetzung für Härze
Composition de revêtement pour résines

(30) Priority: 07.12.2012 JP 2012268642
(43) Date of publication of application: 11.06.2014
(73) Proprietor: Shin-Etsu Chemical Co., Ltd., Chiyoda-ku, Tokyo (JP)
(72) Inventor: Fukushima, Motoo, Annaka-shi, Gunma (JP); Aoki, Yukimasa, Annaka-shi, Gunma (JP); Yoshizawa, Masahiro, Annaka-shi, Gunma (JP)
(74) Representative: Stoner, Gerard Patrick

(56) References cited:
- EP-A1- 2 426 175
- WO-A2-2007/085320
- WO-A2-2007/085339
- US-A- 4 278 804
- US-A- 4 525 426
- US-A- 4 680 232
- GEORG THIEME VERLAG: 'SPEKTROSKOPISCHE METHODEN IN DER ORGANISCHEN CHEMIE', 1984 deel HESSE, MANFRED ET AL, pages 2,3 - 12,13
- UV SPEKTRUM DYNASYLAN(R) GLYMO

## Description

### TECHNICAL FIELD

This invention relates to a silicone-based coating composition applicable to resin substrates to form UV-screening films.

### BACKGROUND

Because of transparency, light weight, and impact resistance, thermoplastic resins, especially polycarbonate resins become widespread as structural substitutes for glass. However, polycarbonate resins are poor in surface properties including mar resistance, weather resistance and chemical resistance, with their use being limited. It would be desirable to improve surface properties of polycarbonate resin substrates.

One method of improving surface properties is by coating the surface of polycarbonate resin moldings with surface treating agents. For example, cured layers of photo-curable resins such as multifunctional acrylic resins and thermosetting resins such as melamine and organopolysiloxane resins are formed on the surface of polycarbonate resin substrates.

Of these, coatings of organosiloxane resins are regarded useful because of their mar resistance and chemical resistance. However, since the organosiloxane resin coatings are unsatisfactory in adhesion to polycarbonate resins, they will peel off during a long period of outdoor service. If the thickness of organosiloxane resin coatings is increased for the purpose of enhancing adhesion and abrasion resistance, such thick coatings are likely to crack upon curing. It is desired to overcome these problems.

Adhesion or bond strength is improved by compounding an adhesive polymer in a coating composition as disclosed in Patent Document 1. This composition is still insufficient in mar resistance. If organic solvents such as toluene and tetrahydrofuran are used to dissolve polymers, the solvents can attack the surface of polycarbonate substrates, making it difficult to form transparent laminates. Sometimes, the solvents adversely affect the weather resistance of coating compositions. Thus, in the application where mar resistance and weather resistance are needed, a common practice is the dual coat method of applying an acrylic or urethane-based coating composition containing a UV absorber onto a polycarbonate resin substrate as a primer, and coating a hardcoat layer thereon as disclosed in Patent Document 2. However, the dual coat method is less productive because of prolonged working steps. There is a desire to have a single coat method.

Patent Document 3 discloses a single coat method of forming a thermoset film on a polycarbonate resin using aqueous emulsion and colloidal silica. The thus formed film has a structure that silica particles are dispersed within an organic deposit resulting from fusion of organic fine particles. This film is tightly adherent to resin substrates, but lacks abrasion resistance because the surface layer consists of organic fine particles.

In Patent Document 4, mar resistance and adhesion are achieved by the single coat method. This method uses an alkoxysilane and a silane coupling agent which is at least one epoxy or amino-containing silane coupling agent. However, the cured layer is not regarded sufficient in weather resistance because of no consideration of UV absorption and hence, a lack of UV screening capability.

Patent Document 5 discloses a composition comprising a silicone-containing polymeric UV absorber and a polyorganosiloxane. However, dispersion cannot be stabilized merely by mixing the polymeric UV absorber with polyorganosiloxane.

All the above-referred methods need a heating equipment or an equipment for irradiating energy radiation such as ultraviolet radiation (UV). None of them can improve surface properties simply by coating.

### Citation List

Patent Document 1: JP-A H11-043646
Patent Document 2: JP-A 2004-131549 (USP 7157146, EP 1408082B1)
Patent Document 3: JP-A 2003-082272
Patent Document 4: JP 4110402 (USP 7193026)
Patent Document 5: JP-A 2004-001393 (USP 6620509, EP 1357145B1)

All of documents US 4 278 804, US 4 525 426, US 4 680 232 and EP 2 426 175 disclose coating compositions which are very similar to the composition of claim 1, differing however in that they do not comprise phosphorous acid, but another acidic condensation catalyst.

### THE INVENTION

An object of the invention is to provide a silicone-based coating composition which is applicable to resin substrates, typically polycarbonate substrates in tight bond without a need for primer and which is curable into a cured film having mar resistance and UV screening capability (regarded as an index of durability) without a need for an equipment for heating or irradiating UV radiation.

Differently stated, an object is to provide a coating composition which forms a cured film on the surface of a resin substrate without an intervening primer layer, the cured film having a sufficient bond strength to the substrate, serving to enhance the surface hardness of the resin substrate, and having a good UV screening capability to prevent the substrate from degradation by UV, and transparent appearance.

The inventors have found that a coating composition comprising (A) an alkoxysilane having a UV-absorbing functional group, (B) colloidal particles of silicon oxide, (C) a multifunctional alkoxysilane and/or a partial hydrolytic condensate thereof, and (D) phosphoric acid is suited for use with resins in that it is applicable in tight bond to resin substrates, typically polycarbonate substrates without a need for primer and curable into a cured film having transparency, mar resistance and UV screening without a need for heating, UV irradiating or other energy supply equipment.

Accordingly, the invention provides a coating composition for resins comprising
(A) an alkoxysilane having a UV-absorbing functional group,
(B) colloidal particles of silicon oxide,
(C) a multifunctional alkoxysilane and/or a partial hydrolytic condensate thereof, and
(D) phosphoric acid.
and wherein component (A) is selected from a benzophenone-bearing silane having the general formula (I) and a benzotriazole-bearing silane having the general formula (II): 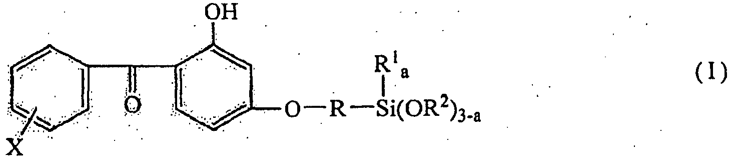 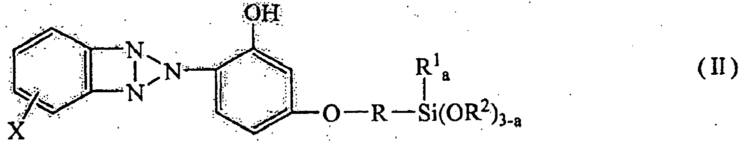 wherein R is an alkylene group of 2 to 6 carbon atoms, R¹ and R² are each independently an alkyl group of 1 to 5 carbon atoms, X is hydrogen, an alkyl group of 1 to 10 carbon atoms, aryl group of 6 to 10 carbon atoms, hydroxyl or halogen, and a is 0 or 1.

Preferably component (C) comprises an alkoxy-containing organosilicon compound having the average compositional formula (III):

R³_{b}Si(OR⁴)_{c}O_{(4-b-c)/2} (III)

wherein R³ is at least one group selected from substituted or unsubstituted alkyl groups and aryl groups, R⁴ is an alkyl group of 1 to 5 carbon atoms, b and c are numbers in the range: 1 s b < 2, 0.1 s c s 3, and 1.1 ≤ b+c s 4.

Preferably the composition comprises 3 to 50 parts by weight of component (A), 5 to 30 parts by weight of component (B), 100 parts by weight of total component (C), and 1 to 20 parts by weight of component (D).

If desired, the coating composition may further comprise (E) a solvent.

Typically the coating composition is applied to polycarbonate resins. The corresponding coating method and coated products are aspects of our invention.

### ADVANTAGEOUS EFFECTS

We find that coating compositions as described herein can be applied to resin substrates, typically polycarbonate substrates, in tight bond without a need for primer and cured into a cured film having transparency, mar resistance and UV screening capability (regarded as an index of durability) without a need for special equipment like heating equipment or energy radiation supply.

### BRIEF DESCRIPTION OF DRAWINGS

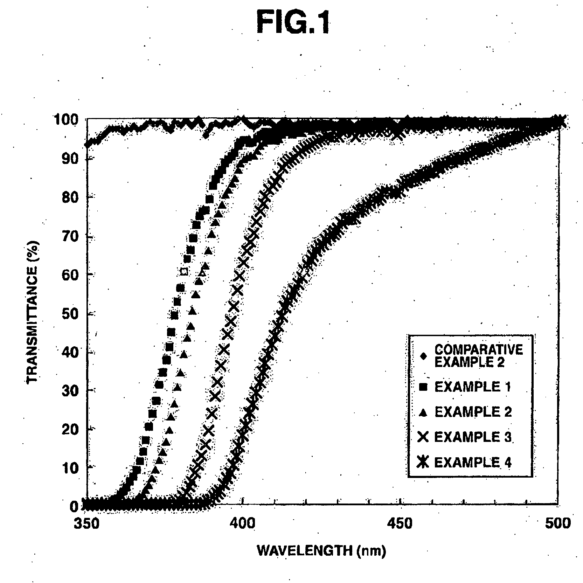

FIG. 1 is a diagram showing UV and visible light transmission spectra of the cured films of coating compositions in Examples.

### FURTHER EXPLANATIONS; OPTIONS AND PREFERENCES

### Coating composition

The coating composition of the invention is a silicone-based coating composition which is applied to a resin substrate for imparting mar resistance and UV screening capability to the resin substrate surface. The coating composition is defined as comprising components (A) to (D) and optional component (E), that is,
(A) the specified alkoxysilane having a UV-absorbing functional group,
(B) colloidal particles of silicon oxide,
(C) a multifunctional alkoxysilane and/or a partial hydrolytic condensate thereof,
(D) phosphoric acid, and
(E) a solvent.

These components are described below in detail.

### Component A

Component (A) is an alkoxysilane having a UV-absorbing functional group, specifically a UV-absorbing functionality-bearing alkoxysilane selected from a benzophenone-bearing silane having the general formula (I) and a benzotriazole-bearing silane having the general formula (II). 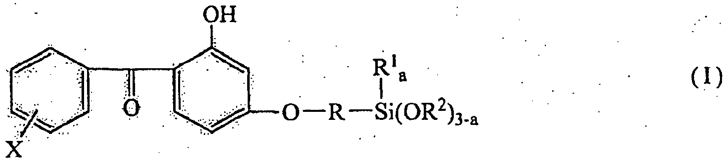 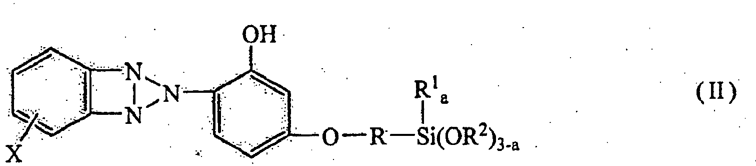 Herein R is an alkylene group of 2 to 6 carbon atoms, R¹ and R² are each independently an alkyl group of 1 to 5 carbon atoms, X is hydrogen, an alkyl group of 1 to 10 carbon atoms, aryl group of 6 to 10 carbon atoms, hydroxyl or halogen, and a is 0 or 1.

In formulae (I) and (II), R is an alkylene group of 2 to 6 carbon atoms, such as ethylene, propylene (trimethylene or methylethylene), butylene (tetramethylene or methylpropylene), or hexamethylene. Inter alia, ethylene, trimethylene and methylethylene are preferred.

R¹ and R² are independently selected from alkyl groups of 1 to 5 carbon atoms, such as methyl, ethyl, propyl, isopropyl, butyl, isobutyl, tert-butyl, pentyl, and neopentyl. Preferably R¹ is methyl, and R² is methyl or ethyl.

X is selected from hydrogen, alkyl groups of 1 to 10 carbon atoms, such as methyl, ethyl, propyl, isopropyl, butyl, isobutyl, tert-butyl, pentyl, neopentyl, hexyl and octyl, aryl groups of 6 to 10 carbon atoms, such as phenyl, tolyl, xylyl, and naphthyl, hydroxyl groups, and halogen atoms such as fluorine, chlorine and bromine. Preferably X is hydrogen or methyl.

The alkoxysilane has a UV-absorbing functional group, a benzophenone or benzotriazole structure, in its molecule, which contributes to UV absorption. It also has at a molecular end an alkoxyl group which is hydrolyzable to form a highly reactive silanol group, which is condensation polymerizable. In this sense, the alkoxysilane will build up the molecular weight by itself or bond with another binder component.

The compound of formula (I) or (II) may be prepared, for example, by starting with a benzophenone or benzotriazole having two or more hydroxyl groups, and reacting it with an allyl halide to form an allyloxybenzophenone or allyloxybenzotriazole. The allyloxy-benzophenone or benzotriazole is then reacted with a hydrosilane in the presence of a platinum catalyst, optionally in an inert solvent such as toluene or tetrahydrofuran or in a solventless system. The hydrosilane used herein is selected from hydrosilane compounds having one, two or three methoxy, ethoxy, propoxy, butoxy or pentoxy groups per molecule, with trimethoxysilane and triethoxysilane being preferred.

For example, the alkoxysilane having a UV-absorbing functional group is prepared as follows. First dihydroxy-benzophenone or dihydroxyphenylbenzotriazole is reacted with an allyl halide and potassium carbonate in a ketone-base organic solvent, forming hydroxy-allyloxy-benzophenone or hydroxyallyloxyphenyl-benzotriazole. Then hydroxyallyloxybenzophenone or hydroxyallyloxyphenyl-benzotriazole is reacted with a hydroalkoxysilane in the presence of a platinum catalyst, yielding hydroxy(alkoxysilylallyloxy)benzophenone or hydroxy(alkoxysilylallyloxy)phenylbenzotriazole.

The reactions may be carried out in a range from room temperature (25°C) to 150°C, preferably from 25°C to 100°C. Where trimethoxysilane is used, the reaction completes within 30 minutes to 2 hours at an (elevated) temperature from room temperature (25°C) to 90°C.

In the coating composition, component (A) is preferably used in an amount of 3 to 50 parts, more preferably 5 to 45 parts by weight per 100 parts by weight of component (C). A composition with less than 3 parts of component (A) may be less UV absorptive or less UV screening and short of adhesion. If the amount of component (A) exceeds 50 parts, no further improvement in UV screening may be achieved, and the hardness and other properties of cured film may be degraded since the contents of the other components are relatively reduced.

### Component B

Component (B) is colloidal particles of silicon oxide, that is, colloidal silica, which serves to provide a cured film of the coating composition with a higher hardness for imparting improved mar resistance. The colloidal silica used herein may be either unmodified or modified. This means that silica may be surface modified with hydrolyzable silicon or silanol groups as long as the objects of the invention are not compromised. Unmodified colloidal silica is available in acidic or basic dispersion form.

Although no particular limit is imposed on the dispersing medium of the dispersion, solvents having a relatively low boiling point (typically 30 to 200°C, especially 40 to 120°C under atmospheric pressure), that is, commonly used solvents are preferred from the standpoint of drying or the like. For example, suitable dispersing media include water; alcohols such as methanol, ethanol, isopropanol, n-butanol, 2-methylpropanol, 4-hydroxy-4-methyl-2-pentanone, ethylene glycol, propylene glycol monomethyl ether (PGM), polyethylene glycol monomethyl ether (PGMD); cellosolves such as methyl cellosolve, ethyl cellosolve and butyl cellosolve; dimethylacedamide, toluene, xylene, methyl acetate, ethyl acetate, butyl acetate, and acetone. Inter alia, alcohols and propylene glycol monomethyl ether acetate (PMA) are preferred as the dispersing medium. Hereinafter, a dispersion of colloidal silica in a dispersing medium is referred to as "colloidal silica dispersion."

For dispersibility, the colloidal silica typically has an average particle size of up to 200 nm, preferably 1 to 100 nm, and more preferably 1 to 50 nm. Notably, the average particle size is given as a median diameter on volume basis measured by a particle size distribution meter of laser diffraction scattering.

On use of colloidal silica dispersion, the content or concentration of colloidal silica is arbitrary although a concentration of 10 to 70% by weight is preferred for ease of handling.

In the coating composition, component (B) is preferably used in an amount of 5 to 30 parts, more preferably 10 to 25 parts by weight per 100 parts by weight of component (C). Less than 5 parts of component (B) may lead to a lowering of film hardness whereas more than 30 parts of component (B) may lead to a lack of shelf stability.

### Component C

Component (C) is a multifunctional alkoxysilane and/or a partial hydrolytic condensate thereof, which serves to improve the flexibility and strength of a film of the coating composition. Preferably, component (C) contains an alkoxy-containing organosilicon compound having the average compositional formula (III).

R³_{b}Si(OR⁴)_{c}O_{(4-b-c)/2} (III)

Herein R³ is one or more groups selected from substituted or unsubstituted alkyl groups and aryl groups, R⁴ is an alkyl group of 1 to 5 carbon atoms, band c are numbers in the range: 1 ≤ b < 2, 0.1 ≤ c ≤ 3, and 1.1 ≤ b+c ≤ 4.

In formula (III), R³ may be the same or different and is selected from substituted or unsubstituted alkyl groups, preferably of 1 to 10 carbon atoms, and aryl groups. Examples include alkyl groups such as methyl, ethyl, propyl, butyl, hexyl, octyl, decyl, cycloalkyl groups such as cyclohexyl, and aryl groups such as phenyl and tolyl. R⁴ is an alkyl group of 1 to 5 carbon atoms, examples of which are the same as described for R¹ and R² in formulae (I) and (II). Of these, it is preferred from the standpoints of versatility and economy of organosilicon compound, and curability, coating properties, function and shelf stability of the coating composition that R³ be methyl, ethyl, propyl or phenyl and R⁴ be methyl or ethyl.

In formula (III), b and c are numbers in the range: 1 ≤ b < 2, 0.1 ≤ c ≤ 3. and 1.1 ≤ b+c ≤ 4.

The multifunctional alkoxysilane and/or a partial hydrolytic condensate thereof as component (C) is a class of dialkoxysilanes, trialkoxysilanes, tetraalkoxysilanes and partial (co)hydrolytic condensates of one or more of these silanes. Illustrative examples of the multifunctional alkoxysilane and partial hydrolytic condensate include tetramethoxysilane, tetraethoxysilane, tetraisopropoxysilane, methyltrimethoxysilane, methyltriethoxysilane, methyltriisopropoxysilane, dimethyldimethoxysilane, diethyldiethoxysilane, ethyltrimethoxysilane, ethyltriethoxysilane, ethyltriisopropoxysilane, propyltrimethoxysilane, propyltriethoxysilane, propyltriisopropoxysilane, butyltrimethoxysilane, butyltriethoxysilane, hexyltrimethoxysilane, hexyltriethoxysilane, octyltrimethoxysilane, octyltriethoxysilane, decyltrimethoxysilane, decyltriethoxysilane, cyclohexyltrimethoxysilane, cyclohexyltriethoxysilane, phenyltrimethoxysilane, phenyltriethoxysilane, phenyltriisopropoxysilane, phenyltriacetoxysilane, tolyltrimethoxysilane, tolyltriethoxysilane, and partial (co)hydrolytic condensates thereof.

The partial (co)hydrolytic condensates include those consisting of 2 to 100 units, preferably 2 to 50 units, and more preferably 2 to 30 units of silane compound. It is understood that a condensate consisting of 2 units (known as dimer) is obtained by letting 1 mole of water act on 2 moles of silane compound, eliminating 2 moles of alcohol, thus leaving a disiloxane unit. It is acceptable to use a partial cohydrolytic condensate obtained from hydrolysis of two or more silane compounds.

It is preferred from the standpoints of curability of coating composition, and surface hardness, crack resistance and substrate adhesion of cured film that a trialkoxysilane compound and/or its partial hydrolytic condensate account for at least 30 mol%, more preferably 40 to 100 mol% of component (C). It is also preferred that a tetraalkoxysilane compound and/or its partial hydrolytic condensate account for 0 to 40 mol% of component (C), and a dialkoxysilane compound and/or its partial hydrolytic condensate account for 0 to 60 mol% of component (C).

In one preferred embodiment, a partial (co)hydrolytic condensate of methyltrimethoxysilane and/or methyltriethoxysilane is used as the organosilicon compound (C). The thus formulated coating composition is effectively curable at room temperature and forms a cured film having a good balance of transparency, surface hardness, abrasion resistance, adhesion, weather resistance, rust prevention, and chemical resistance. This coating composition is very useful as a surface protective coating agent for a variety of articles.

When a tetraalkoxysilane compound and/or its partial hydrolytic condensate is compounded along with a trialkoxysilane compound and/or its partial hydrolytic condensate as component (C), the surface hardness of a cured film can be further increased. However, a larger proportion of tetraalkoxysilane compound and/or its partial hydrolytic condensate may have a risk of cracking. Similarly, the combined use of a dialkoxysilane compound and/or its partial hydrolytic condensate imparts toughness and flexibility to a cured film. However, a larger proportion of dialkoxysilane compound and/or its partial hydrolytic condensate may fail to provide a high crosslinking density, resulting in losses of surface hardness and curability.

As component (C), the aforementioned silane compound and/or its partial hydrolytic condensate may be used alone. A mixture of two or more silane compounds of different structures or partial (co)hydrolytic condensates thereof may also be used. A mixture of a silane compound and a partial (co)hydrolytic condensate is also acceptable.

Component (C) preferably has a viscosity of 1 to 500 mm²/s, more preferably 3 to 100 mm²/s at 25°C as measured by Ostwald viscometer.

Alkoxysilanes (A) are not comprehended under (C).

### Component D

Component (D) is phosphoric acid, which is a curing agent for the coating composition. Included are orthophosphoric acid and polyphosphoric acid. Orthophosphoric acid is preferred because of availability and cure function as the curing agent.

In the coating composition, component (D) is preferably used in an amount of 1 to 20 parts, more preferably 3 to 10 parts by weight per 100 parts by weight of component (C). Less than 1 part of component (D) may achieve a very slow cure rate at room temperature whereas more than 20 parts may adversely affect the water resistance of a film.

Component (D) may be hydrous as long as the objects of the invention are not compromised. Such hydrous phosphoric acid is convenient because a 85% pure product is commercially available.

### Other components

In the coating composition of the invention, (E) a solvent may be added as a diluent for facilitating coating operation. The solvent is preferably selected from organic solvents, typically alcohols and alcohol-containing organic solvents. That is, the alcohol may be used alone or in combination with another solvent. In this regard, a mixture of two or more alcohols and/or a mixture of two or more solvents may be used.

Examples of the solvent (E) include alcohols such as methanol, ethanol, isopropyl alcohol, butanol, isobutyl alcohol, ethylene glycol, diethylene glycol, triethylene glycol, ethylene glycol monomethyl ether, diethylene glycol monomethyl ether, triethylene glycol monomethyl ether, propylene glycol monomethyl ether (PGM), polyethylene glycol monomethyl ether (PGMD); and other organic solvents, for example, ketones such as acetone, methyl ethyl ketone, and methyl isobutyl ketone, and esters such as ethyl acetate, butyl acetate and isobutyl acetate.

In the coating composition, component (E) is preferably used in an amount of 0 to 100 parts, more preferably 0 to 55 parts by weight per 100 parts by weight of components (A) to (D) combined. Differently stated, the solvent is preferably used in such amounts that the coating composition may have a solid concentration of 30 to 90%, more preferably 50 to 80% by weight. Outside the concentration range, a film obtained by coating and curing the composition may become defective. Specifically, the coating may have opportunities for sags, runs, twists, mottles, whitening and cracks, failing to cure into the desired uniform film.

The method of preparing the coating composition is not particularly limited. The composition may be prepared by combining components (A) to (D) and optionally component (D) and mixing them. The preferred method includes the steps of combining some components together and stirring them at 20 to 50°C for 0.1 to 5 hours.

### Film formation method

The coating composition thus obtained may be applied onto a resin substrate by the single coat method without a need for primer. The technique of applying the coating composition to a resin substrate may be selected from standard techniques, for example, brush coating, spraying, dipping, flow coating, roll coating, curtain coating, spin coating, and knife coating.

The resin substrate used herein encompasses molded parts of plastics. The coating composition is applicable to substrates of various plastic materials, preferably polycarbonate resins, polystyrene resins, acrylic resins, ABS resins, and vinyl chloride resins, and most preferably to polycarbonate resins having high mechanical strength. The polycarbonate resins are polymers having a carbonate linkage (-O-COO-) in the molecular backbone. Also the polycarbonate resins are thermoplastic resins having impact resistance. By virtue of the impact resistance of polycarbonate, even when a hardcoat layer is formed on the polycarbonate substrate without interposing a primer layer playing the role of shock absorber, the resulting structure has a practically acceptable level of impact resistance.

Although the coating composition may be cured by heating, it will cure via air drying when it is allowed to stand at room temperature. In this sense, the curing temperature and time are not particularly limited. For example, the coating may be heated at a temperature below the heat resistant temperature of the substrate for 10 minutes to 2 hours. Specifically, the coating is allowed to stand or heated at 15 to 100°C for 30 minutes to 48 hours. On a polycarbonate resin substrate, the coating may be allowed to stand at 25 to 30°C for at least 1 minute, preferably for about 24 hours until a sufficient hardness is reached.

Although the thickness of the cured film is not particularly limited, the film thickness is typically in the range of 0.01 to 1,000 µm, especially 0.5 to 200 µm. A film thickness in the range of 1 to 100 µm is preferred in order that the film have hardness, mar resistance, long-term stable adhesion and crack resistance. By repeating the coating step, the composition may be applied in an overlapping manner.

Once the coating composition is applied to a resin substrate, the coating quickly cures at room temperature as mentioned above, resulting in a cured film having improved properties including transparency, surface hardness and adhesion (bond strength).

The coating composition of the invention can be applied to resin substrates, typically polycarbonate substrates in tight bond without a need for primer. The coating can be cured into a cured film having transparency, mar resistance and UV screening capability (regarded as an index of durability) without a need for special equipment such as heating equipment or energy radiation supply. The coating composition can be widely utilized for the purposes of surface protection and UV screening for various articles.

### EXAMPLE

Examples are given below by way of illustration and not by way of limitation.

### 1) Synthesis of silane compounds

### Synthesis Example 1

### Synthesis of UV-absorbing silane (A-I)

In 70 ml of toluene was dissolved 25.4 g (0.1 mol) of 4-allyloxy-2-hydroxybenzophenone. Two droplets (63.5 mg) of platinum catalyst PL50-T (Shin-Etsu Chemical Co., Ltd.) were added to the solution. The solution was heated at 65°C, whereupon 29.3 g (0.24 mol) of trimethoxysilane was added.

The temperature was kept at about 65 to 85°C for about 1 to 2 hours, whereupon the reaction solution was cooled to room temperature. Wakogel® C-100, 5 g, was added to the reaction solution, which was stirred for 1 hour, whereupon the platinum catalyst was removed via adsorption and filtration. Thereafter, toluene was removed by vacuum stripping, obtaining 34.8 g (0.092 mol) of a red oily matter. By NMR spectroscopy, the main product was identified to have the structure of 2-hydroxy-4-trimethoxysilylpropoxybenzophenone having formula (IV) below. Yield 92%.

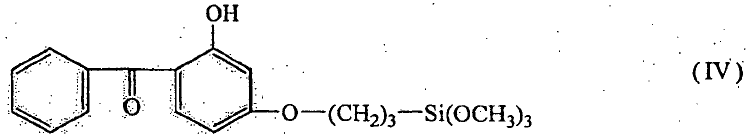

### Synthesis Example 2

### Synthesis of UV-absorbing silane (A-II)

A toluene solution was prepared by adding 26.7 g (0.1 mol) of 4-allyloxy-2-hydroxyphenylbenzotriazole to 100 ml of toluene and heating at 50°C for dissolution. Two droplets (63.5 mg) of platinum catalyst PL50-T (Shin-Etsu Chemical Co., Ltd.) were added to the solution. The solution was heated at 65°C, whereupon 29.3 g (0.24 mol) of trimethoxysilane was added.

The temperature was kept at about 65 to 85°C for about 5 to 6 hours, whereupon the reaction solution was cooled. Wakogel® C-100, 5 g, was added to the reaction solution, which was stirred for 1 hour at room temperature, whereupon the platinum catalyst was removed via adsorption and filtration. Thereafter, toluene was removed by vacuum stripping, obtaining 35.2 g (0.09 mol) of yellow solids. By NMR spectroscopy, the main product was identified to have the structure of 2-hydroxy-4-trimethoxysilylpropoxyphenylbenzotriazole having formula (V) below. Yield 90%.

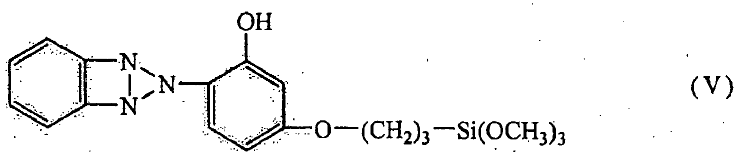

### Synthesis Example 3

### Synthesis of partial hydrolytic condensate of multifunctional alkoxysilane (C-I)

A 500-ml flask equipped with a stirrer, condenser, thermometer and dropping funnel was charged with 115.8 g (0.85 mol) of methyltrimethoxysilane (KBM-13 by Shin-Etsu Chemical Co., Ltd.). With stirring at 25°C, 18.8 g (1.04 mol) of 0.05N hydrochloric acid solution was added dropwise, whereupon hydrolytic reaction was run for 2 hours under reflux of methanol formed during reaction. The reaction solution was heated at 120°C for distilling off methanol, then cooled to room temperature, and filtered, obtaining 85 g of multifunctional methoxysilane (average degree of polymerization 5, viscosity 5 mm²/s at 25°C). This partial hydrolytic condensate of multifunctional alkoxysilane had the average composition: MeSi(OMe)_{1.4}O_{0.8} wherein Me stands for methyl.

### 2) Preparation of starting materials.

The following starting materials were purchased from chemical suppliers.
(B) Colloidal particles of silicon oxide: methanol silica sol (colloidal silica dispersed in methanol, nonvolatile 30%, by Nissan Chemical Industries, Ltd.)
(C-II) Alkoxysilane: dimethyldimethoxysilane (KBM-22 by Shin-Etsu Chemical Co., Ltd.)
(D) Phosphoric acid: orthophosphoric acid (purity 85% by Wako Pure Chemical Industries, Ltd.)

### 3) Preparation of coating composition

### Example 1

A 300-ml flask equipped with a stirrer, condenser, thermometer and dropping funnel was charged with 33.75 g of dimethyldimethoxysilane (C-II). With stirring at 25°C, 3.75 g of orthophosphoric acid (D) was added dropwise. The mixture was stirred for 30 minutes, 12.5 g of methanol silica sol (B) was then added, after which 5 g of UV-absorbing silane (A-I) and 45 g of partial hydrolytic condensate of multifunctional alkoxysilane (C-I) were added. The mixture was mixed for one hour at room temperature, obtaining a coating composition.

### Example 2

A coating composition was prepared as in Example 1 aside from using 10 g of UV-absorbing silane (A-I) and 40 g of partial hydrolytic condensate (C-I).

### Example 3

A coating composition was prepared as in Example 1 aside from using 25 g of UV-absorbing silane (A-I) and 25 g of partial hydrolytic condensate (C-I).

### Example 4

A coating composition was prepared as in Example 1 aside from using 5 g of UV-absorbing silane (A-II) instead of 5 g of UV-absorbing silane (A-I).

### Comparative Example 1

A 300-ml flask equipped with a stirrer, condenser, thermometer and dropping funnel was charged with 47.5 g of dimethyldimethoxysilane (C-II). With stirring at 25°C, 5 g of orthophosphoric acid (D) was added dropwise. After stirring for 30 minutes, 47.5 g of partial hydrolytic condensate of multifunctional alkoxysilane (C-I) was added. The mixture was mixed for one hour at room temperature, obtaining a coating composition.

### Comparative Example 2

A coating composition was prepared as in Example 1 aside from omitting UV-absorbing silane (A-I) and changing the amount of partial hydrolytic condensate (C-I) to 50 g.

The formulation of these coating compositions is tabulated in Table 1.

### 4) Properties of liquid coating composition

Properties of the liquid coating compositions were evaluated by the following tests. The results are also shown in Table 1.
Viscosity: measured at 25°C by an Ostwald viscometer
Nonvolatile content:
   measured by placing a sample in an aluminum dish, heating the sample in an atmospheric oven at 150°C for 30 minutes, and determining a weight loss before and after heating
pH: measured at 25°C by a pH meter

### 5) Formation and properties of coating film

A film was formed by surface treatment of a resin substrate with the coating composition. Namely, the coating composition was flow coated onto one surface of a polycarbonate resin plate of 15 cm × 15 cm × 0.5 mm thick (lupilon by Mitsubishi Engineering-Plastics Corp.) and allowed to stand in an atmosphere of 25°C and RH 65% for one day for curing. The cured film had a thickness of about 10 µm. The cured film was evaluated for properties including transparency, UV screen, hardness, and adhesion by the following tests. The results are shown in Table 1 together with their overall evaluation.

### (1) Transparency

The outer appearance of the cured film was visually observed and rated for transparency according to the following criteria.
○: fully transparent
Δ: partially cloudy
×: totally cloudy

### (2) UV screen

The UV/visible transmission spectrum of the cured film on PC resin plate (0.5 mm thick) was measured over a wavelength range of 350-500 nm by a spectrophotometer U-3310 by Hitachi, Ltd. The results are shown in the diagram of FIG. 1.

The UV screening capability of the cured film was evaluated in terms of transmittance at wavelength 350 nm.

| Rating | Transmittance |
|---|---|
| ○ | not m ore than 5% |
| Δ | more than 5% to 25% |
| × | more than 25% |

### (3) Hardness

Abrasion resistance was examined by using a Taber abrasion tester and operating CS-10F wheel under a load of 500 g over 20 cycles. The haze (%) of the cured film was measured by a haze meter. In terms of a difference between the initial haze and the haze of the abraded film, the film was rated as follows.

| Rating | Transmittance |
|---|---|
| ○ | not more than 10% |
| Δ | more than 10% to 20% |
| × | more than 20% |

### (4) Adhesion

Adhesion or bond strength was analyzed by a cross-hatch adhesion test according to JIS K-5400, specifically by scribing the cured film with a razor along 6 longitudinal and 6 transverse lines at a spacing of 2 mm to define 25 square sections, tightly attaching adhesive tape (Cellotape by Nichiban Co., Ltd.) thereto, rapidly pulling back the adhesive tape at an angle of 90°, and counting the number (X) of film sections kept unpeeled, with the result being reported as X/25.

| Rating | X |
|---|---|
| ○ | 25 |
| Δ | 10 to less than 25 |
| × | less than 10 |

### (5) Overall evaluation

The film is rated good (○) when all items are "○", or the number of items rated "Δ" is not more than 1. The film is rated fair (Δ) when two or less items are "Δ" and no items are "×." The film is rated poor (×) when one or more items are "×", or three or more items are "Δ".

**Table 1**

| | | Example | | | | Comparative Example | |
|---|---|---|---|---|---|---|---|
| | | 1 | 2 | 3 | 4 | 1 | 2 |
| Formulation (pbw) | (C-II) Dimethyldimethoxy silane | 33.75 | 33.75 | 33.75 | 33.75 | 47.5 | 33.75 |
| | (D) Orthophosphoric acid | 3.75 | 3.75 | 3.75 | 3.75 | 5 | 3.75 |
| | (B) Methanol silica sol | 12.5 | 12.5 | 12.5 | 12.5 | 0 | 12.5 |
| | (A-I) | 5 | 10 | 25 | 0 | 0 | 0 |
| | (A-II) | 0 | 0 | 0 | 5 | 0 | 0 |
| | (C-I) | 45 | 40 | 25 | 45 | 47.5 | 50 |
| | Total | 100 | 100 | 100 | 100 | 100 | 100 |
| Properties of liquid coating composition | Viscosity (mm²/s) | 2.0 | 2.2 | 3.2 | 3.5 | 1.3 | 1.8 |
| | Nonvolatile content (%) | 60.7 | 58.8 | 60.3 | 63.9 | 51.9 | 59.8 |
| | pH | 1.3 | 1.3 | 1.3 | 1.2 | 1.7 | 1.4 |
| Evaluation | Transparency | ○ | ○ | ○ | ○ | ○ | ○ |
| | UV screen | ○ | ○ | ○ | ○ | × | × |
| | Hardness | ○ | ○ | Δ | Δ | Δ | ○ |
| | Adhesion | ○ | ○ | ○ | ○ | Δ | × |
| | Overall evaluation | ○ | ○ | ○ | ○ | × | × |

It is seen from Table 1 that the coating compositions (Examples 1 to 4) within the scope of the invention were cured into films which were excellent in transparency, adhesion and mar resistance, and had satisfactory UV screening properties as demonstrated by a UV transmittance of 0% at 350 nm. In contrast, the composition free of UV-absorbing silane and methanol silixa sol (Comparative Example 1) was cured into a film having no UV screening capability and low hardness. When silica was added to the same composition (Comparative Example 2), film hardness was improved, but UV screening capability was not improved, and adhesion was exacerbated.

It has been demonstrated in Examples 1 to 4 that the coating compositions within the scope of the invention are fully curable at room temperature, and form cured films having excellent transparency, hardness, adhesion and UV screening properties. In contrast, the compositions of Comparative Examples 1 and 2 are unsatisfactory in one or more of cured film properties.

When the coating composition within the scope of the invention is applied onto a resin substrate, it quickly cures at room temperature into a cured film having excellent transparency, hardness, adhesion and UV screening properties.

The coating composition within the scope of the invention is applicable onto a resin substrate without a need for primer. The coating can cure or be cured into a cured film having mar resistance and UV screening capability (regarded as an index of durability) without a need for a special energy equipment such as heating equipment or energy radiation supply. The coating composition is widely utilizable for providing surface protection for and imparting UV screening capability to various articles such as exterior members, optical members and molded parts of resins.

### Notes

(1) In numerical ranges disclosed in the present description it will be understood that in the normal way the technical criterion for the upper limit is different from that for the lower limit, i.e. upper and lower limits are intrinsically distinct proposals.
(2) For the avoidance of doubt it is confirmed that in the general description above, in the usual way the proposal of general preferences and options in respect of different features of the coating composition, coating method and coated product constitutes the proposal of general combinations of those general preferences and options for the different features, insofar as they are combinable and compatible and are put forward in the same context.

## Claims

1. A coating composition for resins comprising
(A) alkoxysilane having a UV-absorbing functional group,
(B) colloidal particles of silicon oxide,
(C) multifunctional alkoxysilane and/or partial hydrolytic condensate thereof, and
(D) phosphoric acid, and
wherein component (A) is selected from a benzophenone-bearing silane having the general formula (I) and a benzotriazole-bearing silane having the general formula (II): 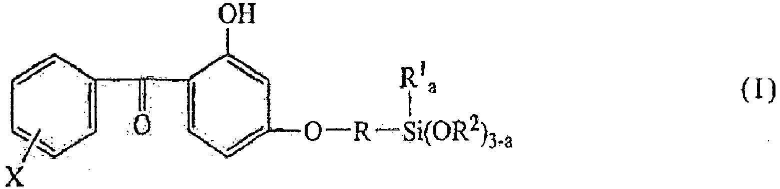 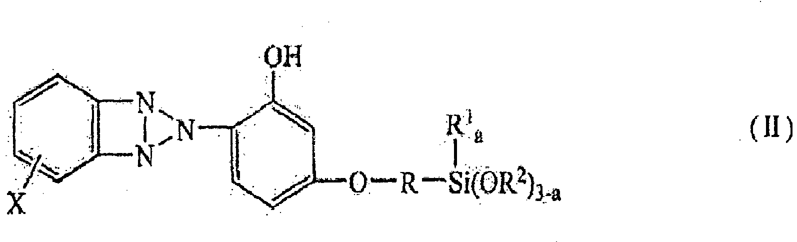 wherein R is an alkylene group of 2 to 6 carbon atoms, R¹ and R² are each independently an alkyl group of 1 to 5 carbon atoms, X is hydrogen, an alkyl group of 1 to 10 carbon atoms, aryl group of 6 to 10 carbon atoms, hydroxyl or halogen, and a is 0 or 1.

2. The coating composition of claim 1 in which component (B) is colloidal silica of average particle size 1 to 100 nm, in an amount of 5 to 30 parts by weight per 100 parts by weight of component (C), wherein the average particle size is given as a median diameter on volume basis measured by a particle size distribution meter of laser diffraction scattering.

3. The coating composition of claim 1 or claim 2 wherein component (C) comprises an alkoxy-containing organosilicon compound having the average compositional formula (III):
R³_{b}Si(OR⁴)_{c}O_{(4-b-c)/2} (III)
wherein R³ is at least one group selected from substituted or unsubstituted alkyl groups and aryl groups, R⁴ is an alkyl group of 1 to 5 carbon atoms, b and c are numbers in the range: 1 ≤ b < 2, 0.1 ≤ c ≤3 and 1.1 ≤ b+c ≤ 4.

4. The coating composition of any one of the preceding claims in which a trialkoxysilane compound and/or partial hydrolytic condensate thereof account for at least 30 mol% of component (C).

5. The coating composition of any one of the preceding claims in which component (D) is orthophosphoric acid in an amount of 1 to 20 parts by weight per 100 parts by weight of component (C).

6. The coating composition of any one of the preceding claims wherein 3 to 50 parts by weight of component (A), 5 to 30 parts by weight of component (B) and 1 to 20 parts by weight of component (D) are present relative to 100 parts by weight of total component (C).

7. The coating composition of any one of the preceding claims further comprising (E) a solvent.

8. The coating composition of claim 7 having a solid concentration of 30 to 90% by weight.

9. The coating composition of any one of claims 1 to 8, which is applied to a polycarbonate resin.

10. A coating method comprising applying a coating composition of any one of claims 1 to 8 to a resin substrate and curing.

11. A coating method of claim 10 in which the resin substrate is a polycarbonate substrate.

12. A coating method of claim 10 or 11 in which the coating composition is applied to the resin substrate without intervening primer.

13. A coated resin substrate obtained by a method of claim 10, 11 or 12.

## Patentansprüche

1. Beschichtungszusammensetzung für Harze, die Folgendes umfasst:
(A) Alkoxysilan mit einer UV-absorbierenden funktionellen Gruppe,
(B) kolloidale Teilchen aus Siliciumoxid,
(C) multifunktionelles Alkoxysilan und/oder ein partielles hydrolytisches Kondensat davon und
(D) Phosphorsäure
wobei Komponente (A) aus einem Benzophenon-tragendem Silan der allgemeinen Formel (I) und einem Benzotriazol-tragenden Silan der allgemeinen Formel (II) ausgewählt ist: 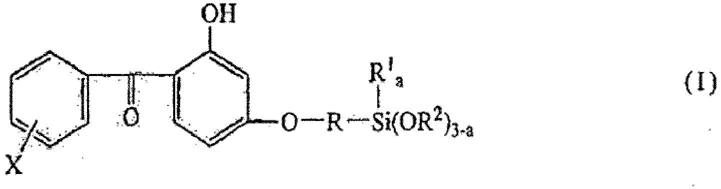 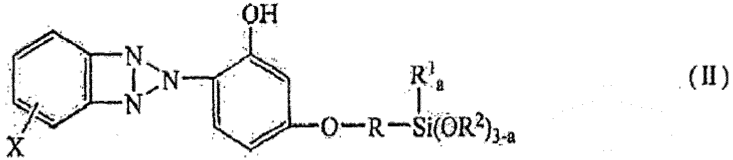 worin R eine Alkylengruppe mit 2 bis 6 Kohlenstoffatomen ist, R¹ und R² jeweils unabhängig eine Alkylgruppe mit 1 bis 5 Kohlenstoffatomen sind, X Wasserstoff, eine Alkylgruppe mit 1 bis 10 Kohlenstoffatomen, eine Arylgruppe mit 6 bis 10 Kohlenstoffatomen, Hydroxyl oder Halogen ist und a = 0 oder 1 ist.

2. Beschichtungszusammensetzung nach Anspruch 1, in der Komponente (B) kolloidale Kieselsäure mit einer mittleren Teilchengröße von 1 bis 100 nm in einer Menge von 5 bis 30 Gewichtsteilen pro 100 Gewichtsteile von Komponente (C) ist, worin die mittlere Teilchengröße als der mit einem Laserdiffraktionsstreuungs-Teilchengrößenverteilungsmesser gemessene Median-Durchmesser auf Volumenbasis angegeben ist.

3. Beschichtungszusammensetzung nach Anspruch 1 oder Anspruch 2, worin Komponente (C) eine Alkoxy-haltige Organosilicium-Verbindung der mittleren Zusammensetzungsformel (III) umfasst:
R³_{b}Si(OR⁴)_{c}O_{(4-b-c)/2} (III)
worin R³ zumindest eine Gruppe, ausgewählt aus substituierten oder unsubstituierten Alkylgruppen und Arylgruppen ist, R⁴ eine Alkylgruppe mit 1 bis 5 Kohlenstoffatomen ist und b und c Zahlen im Bereich von: 1 ≤ b < 2, 0,1 ≤ c ≤ 3 und 1,1 ≤ b+c ≤ 4 sind.

4. Beschichtungszusammensetzung nach einem der vorangegangenen Ansprüche, in der eine Trialkoxysilan-Verbindung und/oder ein partielles hydrolytisches Kondensat davon zumindest 30 Mol-% von Komponente (C) ausmachen.

5. Beschichtungszusammensetzung nach einem der vorangegangenen Ansprüche, in der Komponente (D) Orthophosphorsäure in einer Menge von 1 bis 20 Gewichtsteilen pro 100 Gewichtsteile von Komponente (C) ist.

6. Beschichtungszusammensetzung nach einem der vorangegangenen Ansprüche, worin 3 bis 50 Gewichtsteile von Komponente (A), 5 bis 30 Gewichtsteile von Komponente (B) und 1 bis 20 Gewichtsteile von Komponente (D), bezogen auf 100 Gewichtsteile der gesamten Komponente (C) vorhanden sind.

7. Beschichtungszusammensetzung nach einem der vorangegangenen Ansprüche, die weiters (E) ein Lösungsmittel umfasst.

8. Beschichtungszusammensetzung nach Anspruch 7, die eine Feststoffkonzentration von 30 bis 90 Gew.-% aufweist.

9. Beschichtungszusammensetzung nach einem der Ansprüche 1 bis 8, die auf ein Polycarbonatharz aufgebracht ist.

10. Beschichtungsverfahren, umfassend das Aufbringen einer Beschichtungszusammensetzung nach einem der Ansprüche 1 bis 8 auf ein Harzsubstrat und das Härten.

11. Beschichtungsverfahren nach Anspruch 10, wobei das Harzsubstrat ein Polycarbonat-Substrat ist.

12. Beschichtungsverfahren nach Anspruch 10 oder 11, wobei die Beschichtungszusammensetzung ohne dazwischenliegenden Primer auf das Harzsubstrat aufgebracht wird.

13. Beschichtetes Harzsubstrat, erhalten durch ein Verfahren nach Anspruch 10, 11 oder 12.

## Revendications

1. Composition de revêtement pour résines comprenant
(A) un alcoxysilane ayant un groupe fonctionnel absorbant les UV,
(B) des particules colloïdales d'oxyde de silicium,
(C) un alcoxysilane multifonctionnel et/ou un condensat hydrolytique partiel de celui-ci, et
(D) de l'acide phosphorique, et
dans laquelle le composant (A) est choisi parmi un silane portant de la benzophénone répondant à la formule générale (I) et un silane portant du benzotriazole répondant à la formule générale (II) : 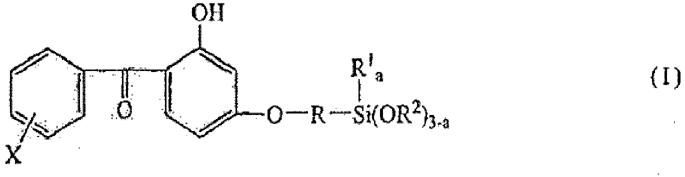 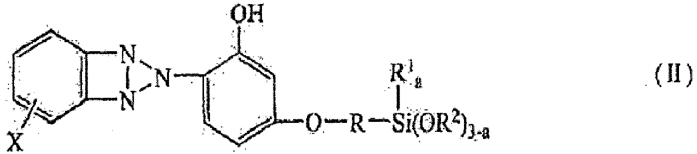 dans laquelle R est un groupe alkylène de 2 à 6 atomes de carbone, R¹ et R² sont chacun indépendamment un groupe alkyle de 1 à 5 atomes de carbone, X est un atome d'hydrogène, un groupe alkyle de 1 à 10 atomes de carbone, un groupe aryle de 6 à 10 atomes de carbone, un groupe hydroxyle ou un atome d'halogène, et a vaut 0 ou 1.

2. Composition de revêtement selon la revendication 1 dans laquelle le composant (B) est une silice colloïdale ayant une taille moyenne de particule de 1 à 100 nm, en une quantité de 5 à 30 parties en poids pour 100 parties en poids de composant (C), dans laquelle la taille moyenne de particule est donnée en tant que diamètre médian sur la base du volume mesurée par un appareil de mesure de la distribution de la taille de particule de dispersion par diffraction laser.

3. Composition de revêtement selon la revendication 1 ou la revendication 2 dans laquelle le composant (C) comprend un composé d'organosilicium contenant un alcoxy répondant à la formule de composition moyenne (III) :
R³_{b}Si(OR⁴)_{c}O_{(4-b-c)/2} (III)
dans laquelle R³ est au moins un groupe choisi parmi les groupes alkyles et groupes aryles substitués ou non substitués, R⁴ est un groupe alkyle de 1 à 5 atomes de carbone, b et c sont des nombres dans la plage : 1 ≤ b < 2, 0,1 ≤ c ≤ 3 et 1,1 ≤ b+c ≤ 4.

4. Composition de revêtement selon l'une quelconque des revendications précédentes dans laquelle un composé trialcoxysilane et/ou un condensat hydrolytique partiel de celui-ci constituent au moins 30 % en mol du composant (C).

5. Composition de revêtement selon l'une quelconque des revendications précédentes dans laquelle le composant (D) est de l'acide orthophosphorique en une quantité de 1 à 20 parties en poids pour 100 parties en poids de composant (C).

6. Composition de revêtement selon l'une quelconque des revendications précédentes dans laquelle de 3 à 50 parties en poids de composant (A), de 5 à 30 parties en poids de composant (B) et de 1 à 20 parties en poids de composant (D) sont présentes par rapport à 100 parties en poids de composant (C) total.

7. Composition de revêtement selon l'une quelconque des revendications précédentes comprenant en outre (E) un solvant.

8. Composition de revêtement selon la revendication 7 ayant une concentration en solides de 30 à 90 % en poids.

9. Composition de revêtement selon l'une quelconque des revendications 1 à 8, qui est appliquée sur une résine de polycarbonate.

10. Procédé de revêtement comprenant l'application d'une composition de revêtement selon l'une quelconque des revendications 1 à 8 sur un substrat de résine et son durcissement.

11. Procédé de revêtement selon la revendication 10 dans lequel le substrat de résine est un substrat de polycarbonate.

12. Procédé de revêtement selon la revendication 10 ou 11 dans lequel la composition de revêtement est appliquée sur le substrat de résine sans primaire intermédiaire.

13. Substrat de résine revêtu obtenu par un procédé selon la revendication 10, 11 ou 12.
